# EUROPÄISCHE PATENTSCHRIFT

(11) **EP 0 565 988 B1**
(45) Veröffentlichungstag und Bekanntmachung des Hinweises auf die Patenterteilung: **19.11.1997**
(21) Anmeldenummer: 93105621.2
(22) Anmeldetag: 05.04.1993
(51) Int. Cl.: G06K 7/08

(54) **Verfahren und Vorrichtung zum Nachweis und zur Dekodierung von weichmagnetischen Tintendruckmerkmalen**
Process and device for detecting and decoding soft magnetic ink print features
Procédé et dispositif pour la détection et le décodage de caractères magnétiques doux imprimés à l'encre

(30) Priorität: 11.04.1992 DE 4212265
(43) Veröffentlichungstag der Anmeldung: 20.10.1993
(73) Patentinhaber: BASF Aktiengesellschaft, 67063 Ludwigshafen (DE)
(72) Erfinder: Kormann, Claudius, Dr., 67105 Schifferstadt (DE); Schwab, Ekkehard, Dr., 67434 Neustadt (DE); Soehring, Gerhard, 69469 Weinheim (DE); Veitch, Roland John, Dr., 67133 Maxdorf (DE)

(56) Entgegenhaltungen:
- EP-A- 0 420 030
- US-A- 3 842 246
- PATENT ABSTRACTS OF JAPAN, vol. 5, no. 115 (P-072), 1981; & JP - A - 56054573

## Beschreibung

Die Erfindung betrifft ein Verfahren und eine Vorrichtung zum Nachweis und zur Dekodierung von weichmagnetischen Tintendruckmerkmalen, die unter Verwendung von magnetischen Tintenkonzentraten erhalten werden.

Es sind zahlreiche Einsatzbereiche für magnetische Druckfarben bekannt, bei denen die Maschinenlesbarkeit der jeweiligen Druckerzeugnisse erforderlich ist. So lassen sich beispielsweise Scheckformulare, Eintrittskarten, Fahrscheine oder Flugtickets mit magnetischen Aufdrucken versehen, die maschinell erfaßbar sind. Auf gleiche Weise können auch Reisepässe, Banknoten oder Wertpapiere maschinenlesbar gemacht werden. Auch andere Objekte wie Bücher, Pakete, Container oder Markenartikel können mit einem magnetischen Druckmerkmal versehen werden. Die magnetischen Druckfarben können zum Druck von Textbuchstaben, Ziffern, Zeichen und insbesondere auch von Strich-Codes eingesetzt werden. Letztere finden weitverbreitete Anwendungen in der Logistik, der Förder- und Lagertechnik.

Bei Verwendung eines magnetischen Tintenkonzentrats, im wesentlichen bestehend aus einer Dispersion superparamagnetischer Feststoffteilchen in Wasser oder Alkohol in Gegenwart mindestens eines Polyelektrolyten mit einem Molekulargewicht zwischen 1000 und 25000 als dispergierende Substanz, ausgewählt aus der Gruppe aus Polyacrylat, Acrylsäure/Acrylamid-Copolymeren und Polyvinylphosphonsäure sowie der Alkalisalze dieser Verbindungen wobei das Tintenkonzentrat eine Viskosität, gemessen bei 22°C, von < 10 cP aufweist sowie eine tigungsmagnetisierung von > 32 mT aufweist, in einem Tintenstrahldrucker können nahezu beliebige Zeichen, Muster, Strich-Codes auf eine Vielzahl von Oberflächen flexibel gedruckt werden.

Aufgabe der vorliegenden Erfindung war es daher, ein Verfahren und eine Vorrichtung zum Nachweis und zur Dekodierung von weichmagnetischen Tintendruckmerkmalen bereitzustellen.

Es wurde nun gefunden, daß sich die Aufgabe zum Nachweis und zur Dekodierung von Druckmerkmalen, erzeugt unter Verwendung magnetischer Tinten, im wesentlichen bestehend aus einer Suspension superparamagnetischer Feststoffteilchen und einer dispergierenden Substanz in Wasser oder Alkoholen in einfacher Weise lösen läßt, wenn ein mit einem bei einer Frequenz von 10 kHz bis 10 MHz schwingenden Oszillator abgestimmte Magnetkopf mit einem Kopfspalt von 5 bis 1000 µm durch das superparamagnetische Material des Titendruckmerkals in seiner Induktivität verändert und die dadurch verursachte Änderung der Schwingfrequenz als Informationsmerkmal registriert wird.

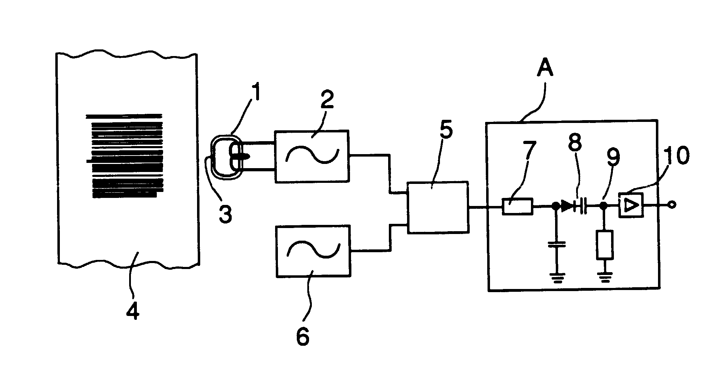

Zur Durchführung des erfindungsgemäßen Verfahrens eignet sich insbesondere eine Vorrichtung, wie sie beispielhaft in Figur 1 dargestellt ist. Hierbei wird der aus Magnetkopf 1 und Oszillator 2 bestehende Schwingkreis mit dem Kopfspalt 3 des Magnetkopfs durch den Einfluß des superparamagnetischen Materials der Druckmerkmale 4 in seiner Induktivität und damit in seiner Schwingfrequenz verändert. Diese Frequenzänderung wird nun in einem Mischer 5 gegen die Frequenz eines Quarz-stabilisierten Oszillators 6 verglichen. Das Signal am Ausgang des Mischers 5 durchläuft einen Tiefpaß 7. Nach Gleichrichtung 8 durchläuft das Signal noch einen Hochpaß 9, dessen Zeitkonstante so gewählt ist, daß sich eine Temperaturdrift des Aufbaus nicht auf die Signalhöhe auswirkt. Das Signal wird anschließend verstärkt (10) und z.B. optisch über eine LED angezeigt, oder akustisch durch einen Tongenerator und Lautsprecher wiedergegeben. Schließlich kann das Signal nach geeigneter Verstärkung an den Eingang eines Strich-Code-Decodergerätes (z.B. das Gerät DPS 9000, Firma Datalogic) angeschlossen werden.

Das beschriebene Gerät zeichnet sich durch seine vorteilhafte Kompaktheit aus. Es kann als transportables Handgerät gebaut werden.

Zur Herstellung der durch das erfindungsgemäße Verfahren nachweisbaren Tintendruckmerkmale eignen sich in besonders vorteilhafter Weise magnetische Tintenkonzentrate wie sie in der deutschen Patentanmeldung P 41 15 608.0 offenbart sind.

## Patentansprüche

1. Verfahren zum Nachweis und zur Dekodierung von Druckmerkmalen, erzeugt unter Verwendung magnetischer Tinten, im wesentlichen bestehend aus einer Suspension superparamagnetischer Feststoffteilchen und einer dispergierenden Substanz in Wasser oder Alkoholen, dadurch gekennzeichnet, daß ein, mit einem bei einer Frequenz von 10 kHz bis 10 MHz schwingenden Oszillator abgestimmter Magnetkopf mit einem Kopfspalt von 5 bis 1000 µm durch das superparamagnetische Material des Tintendruckmerkmals in seiner Induktivität verändert und die dadurch verursachte Änderung der Schwingfrequenz als Informationsmerkmal registriert wird.

2. Vorrichtung zur Durchführung des Verfahrens gemäß Anspruch 1, bestehend aus einem magnetkopfgesteuerten Schwingkreis welcher einen Magnetkopf (1) mit einem Kopfspalt (3) von 5 bis 1000 µm und einen bei einer Frequenz von 10kHz bis 10 MHz schwingenden Oszillator (2) aufweist, einem Mischer (5) zum Vergleich der Frequenz des magnetkopfgesteuerten Schwingkreises mit der Frequenz eines weiteren, quartzstabilisierten Oszillators (6), und einer Auswerteelektronik (A).

## Claims

1. A process for the detection and decoding of prints produced using magnetic inks, consisting essentially of a suspension of superparamagnetic solid particles and a dispersant in water or an alcohol, wherein the inductance of a head having a head gap of from 5 to 1,000 µm and tuned with an oscillator oscillating at a frequency of from 10 kHz to 10 MHz is changed by the superparamagnetic material of the ink print, and the resulting change in the oscillation frequency is recorded as an information characteristic.

2. Apparatus for carrying out the process as claimed in claim 1, consisting of a head-controlled oscillating circuit having a head (1) with a head gap (3) of from 5 to 1,000 µm and an oscillator (2) oscillating at a frequency of from 10 kHz to 10 MHz, a mixer (5) for comparing the frequency of the head-controlled oscillating circuit with the frequency of a further, quartz-stabilized oscillator (6), and evaluation electronics (A).

## Revendications

1. Procédé de détection et de décodage de marques d'impression produites au moyen d'encres magnétiques constituées essentiellement d'une suspension de particules solides superparamagnétiques et d'une substance dispersante dans l'eau ou dans des alcools, caractérisé par le fait que l'inductance d'une tête magnétique ayant un entrefer de 5 à 1000 µm accordée avec un oscillateur oscillant à une fréquence de 10 kHz à 10 MHz est changée par la matière superparamagnétique de la marque d'impression à l'encre et le changement ainsi produit de la fréquence d'oscillation est enregistré comme caractéristique d'information.

2. Dispositif pour la mise en oeuvre du procédé de la revendication 1, constitué d'un circuit oscillant commandé par tête magnétique qui présente une tête magnétique (1) ayant un entrefer (3) de 5 à 1000 um et un oscillateur (2) oscillant à une fréquence de 10 kHz à 10 MHz, d'un mélangeur (5) pour la comparaison de la fréquence du circuit oscillant commandé par tête magnétique avec la fréquence d'un autre oscillateur (6) stabilisé par quartz, et d'un dispositif électronique d'exploitation (A).
